# EUROPÄISCHE PATENTANMELDUNG

(11) **EP 1 538 384 A1**
(43) Veröffentlichungstag der Anmeldung: **08.06.2005**
(21) Anmeldenummer: 04028841.7
(22) Anmeldetag: 06.12.2004
(51) Int. Cl.: F16L 37/14

(54) **Fluidleitungsverbindungsanordnung**

(30) Priorität: 05.12.2003 DE 20318857 U
(71) Anmelder: Eugster/Frismag AG, 8590 Romanshorn (CH)
(72) Erfinder: Fischer, Daniel, 8590 Romanshorn (CH)
(74) Vertreter: Schubert, Siegmar

(57) **Zusammenfassung**

Eine Fluidleitungsverbindungsanordnung mit mindestens einem Verbindungselement ist geeignet, zwei Leitungsenden dicht miteinander zu verbinden. Hierzu ist auf einem Endabschnitt einer ersten Leitung (1) eine Verbindungsmuffe (4) mit einer vorderen ringförmigen Stirnseite und einer hinteren ringförmigen Stirnseite form- und kraftschlüssig anliegend aufgebracht. Von einem Ende einer zweiten Leitung (2, 13) steht eine Verbindungshülse (5) vor, aus der innen eine ringförmige Schulter ausgeformt ist und die geeignet ist, den Endabschnitt der ersten Leitung (1) mit der Verbindungsmuffe (4) aufzunehmen. An der Verbindungshülse (5, 14) wird ein Arretierungselement lösbar angebracht, welches an der hinteren Stirnseite der in die Verbindungshülse eingesteckten Verbindungsmuffe (4) anliegt. Um eine unkompliziert herstellbare und montierbare Fluidverbindungsanordnung zu schaffen, die eine dichte Verbindung der beiden Leitungsenden ergibt, weist die Verbindungsmuffe (4) innen eine durchgehend zylindrische Umfangswand auf, die auf einen durchgehend zylindrischen Endabschnitt der ersten Leitung (1) aufgebracht ist. Nach dem Anbringen des Arretierungselements liegt die vordere ringförmige Stirnseite der Verbindungsmuffe (4) mittelbar oder unmittelbar an der ringförmigen Schulter der Verbindungshülse (5, 14) abdichtend an.

## Beschreibung

Die Erfindung betrifft eine Fluidleitungsverbindungsanordnung nach dem Oberbegriff des Anspruchs 1.

Gattungsgemäß ist die Fluidleitungsverbindungsanordnung mit mindestens einem Verbindungselement ausgebildet, welches geeignet ist, zwei Leitungen dicht miteinander zu verbinden.

Unter dichter Verbindung wird eine druckdichte Verbindung verstanden, die insbesondere auch den Austritt von unter Druck stehender Flüssigkeit verhindert.

Die Fluidleitungsverbindungsanordnungen sind insbesondere in Kaffee- bzw. Espressomaschinen vorgesehen.

Nach dem Stand der Technik werden Schlauch- bzw. Rohrverbindungen beispielsweise durch Kleben hergestellt. Solche Verbindungen bedingen jedoch zeitlich genau einzuhaltende Verbindungsverfahren, insbesondere mit Aushärten eines Klebers. Die fertigen Verbindungen sind nicht ohne weiteres lösbar.

Andere, lösbare Verbindungen sind beispielsweise mit Überwurfmuttern und mit diesen zusammenwirkenden, mit Gewinde versehenen Anschlußteilen realisiert. Diese Verbindungsanordnungen bedingen aufwendig hergestellte Teile und zeitaufwendige Montagevorgänge.

Zum Stand der Technik gehört auch eine Rohrverbindung mit einer Spannhülse, die zwei miteinander zu verschraubende Hülsenhalbschalen umfaßt, deren flanschartige Ansätze durch Schrauben miteinander verspannt werden (DE-A-198 37 803). Die Spannhülse übergreift zwei Rohrenden, und zwar ein erstes Rohrende mit einer ringförmigen Auswölbung und ein zweites, profiliertes Rohrende mit einem Abschnitt größeren Durchmessers. - Auch infolge der Verschraubung und Verspannung ist die Spannhülse umständlich zu montieren und zum Verbinden von zwei Schlauchenden nicht ohne weiteres geeignet.

Andere zum Stand der Technik gehörende Rohrverbinder dienen nur zum Verbinden eines speziellen Rohrendes mit wenigstens einer ringförmig erweiterten Wand (DE 41 42 640, US-A-6 086 118).

Bei einer bekannten Fluidleitungsverbindungsanordnung der eingangs genannten Gattung, mit der ein Schlauchende verbunden werden kann, dient als Verbindungsmuffe ein Metallring, aus dem innen hakenförmige Vorsprünge ausgebildet sind, die in das Schlauchende als erste Leitung außen eingreifen (US-A-3 637 240). Die hakenförmigen Vorsprünge werden insbesondere durch Wirbelstrominduktion in dem Metallring und damit einhergehende Erwärmung des Metallrings in das sich dabei erweichenden Leitung aus Kunststoff verankert, wobei jedoch Einkerbungen in dem Schlauchende auftreten, die ihn schwächen. Andererseits weist eine Verbindungshülse eine innere Bohrung auf, in die das Schlauchende eingreifen kann, sowie eine erweiterte Innenbohrung, in die der Metallring auf dem Endabschnitt der ersten Leitung paßt. In einen Raum in der Verbindungshülse zwischen einer ringförmigen Schulter, die zwischen der inneren Bohrung und der erweiterten Innenbohrung gebildet ist, sowie einer vorderen ringförmigen Stirnseite des Metallrings ist ein abdichtender O-Ring aus Gummi oder einem Elastomer eingebracht, der zwar an der vorderen ringförmigen Stirnseite des Metallrings, nicht aber gleichzeitig an der ringförmigen Schulter in der Verbindungshülse anliegt. Somit kann eine Abdichtung nur auf einer inneren Umfangsseite des Metallrings und auf dessen äußerer Umfangsseite erfolgen, wenn der O-Ring sowohl an die erste Leitung als auch an den Innenumfang der Verbindungshülse dicht angepaßt ist. - Zur Montage dient eine im wesentlichen U-förmige Klammer, die in seitliche Bohrungen in der Verbindungshülse eingeschoben wird, und zwar hinter der in die Verbindungshülse zusammen mit dem Endabschnitt der ersten Leitung eingeschobene Verbindungshülse.

Der vorliegenden Erfindung liegt daher die Aufgabe zugrunde, eine Fluidleitungsverbindungsanordnung zu schaffen, die mit unkompliziert herstellbaren Verbindungselementen und rasch durchführbaren Verbindungsvorgängen auskommt und gleichwohl eine gute Abdichtung der miteinander verbundenen Leitungen nach außen aufweist. Die Fluidleitungsverbindungsanordnung soll sich durch vielseitige Anwendungsmöglichkeiten auszeichnen. Gegebenenfalls sollen mir ihr hergestellte Leitungsverbindungen lösbar sein.

Diese Aufgabe wird mit einer Fluidleitungsverbindungsanordnung mit den im kennzeichnenden Teil des Anspruchs 1 angegebenen Merkmalen gelöst.

Die Lösung geht davon aus, daß auf einem Endabschnitt einer ersten Leitung eine Verbindungsmuffe mit einer vorderen, d.h. einer verbindungsseitig äußeren, einem ersten Leitungsende nächsten ringförmigen Stirnseite und einer von dem ersten Leitungsende entfernteren hinteren ringförmigen Stirnseite form- und kraftschlüssig anliegend aufgebracht ist. Hierzu hat die Verbindungsmuffe innen eine einfache durchgehend zylindrische Umfangswand, die auf einen entsprechend durchgehenden Endabschnitt der ersten Leitung, der also keine wulstartige Erweiterung abweist, aufgebracht ist, zum Beispiel aufgequetscht ist. Unter einer Leitung kann hierbei sowohl eine flexible Leitung bzw. ein Schlauch insbesondere aus Kunststoff oder aber eine starre Leitung oder ein Leitungsabschnitt aus Kunststoff oder ein metallisches Rohr verstanden werden. - Eine Verbindungshülse, die von einem Ende einer zweiten Leitung, die mit der ersten Leitung zu verbinden ist, vorsteht, ist geeignet, den Endabschnitt der ersten Leitung mit der Verbindungsmuffe aufzunehmen.

In der Verbindungshülse ist innen bei dem Ende der zweiten Leitung bzw. des die zweite Leitung bildenden Leitungsabschnitts eine ringförmige Schulter ausgeformt, die zusammen mit der vorderen ringförmigen Stirnseite der Verbindungsmuffe eine Abdichtfunktion ausübt. Indem an der Verbindungshülse ein Arretierungselement lösbar angebracht wird, welches im zusammengesteckten Zustand der Verbindungsmuffe und der Verbindungshülse an der hinteren Stirnseite der Verbindungsmuffe anliegt, gelangt bei der erfindungsgemäßen Gestaltung der Fluidverbindungs-anordnung, insbesondere des Inneren der Verbindungshülse und der Länge sowie Lage der Verbindungsmuffe auf dem Endabschnitt der ersten Leitung die vordere ringförmige Stirnseite der Verbindungsmuffe unmittelbar oder - über ein Dichtelement mittelbar - an der ringförmigen Schulter der Verbindungshülse abdichtend zur Anlage. - Damit ist eine Fluidverbindungsanordnung realisierbar, die auch bei hohen Innendrücken zuverlässig abdichtet.

Als Dichtelement kann insbesondere gemäß Anspruch 2 ein einfacher O-Ring dienen, der zwischen der ringförmigen Schulter der Verbindungshülse und der vorderen ringförmigen Stirnseite der Verbindungsmuffe dicht anliegend eingeschlossen wird. Indem der O-Ring zwischen der ringförmigen Schulter der Verbindungshülse und der vorderen ringförmigen Stirnseite der Verbindungsmuffe zusammengepreßt wird, kann der O-Ring darüber hinaus eine gute Abdichtung auch an seinem Außenumfang in der Verbindungshülse und an seinem Innenumfang auf dem Endabschnitt der ersten Leitung bewirken.

Als zusätzliche Abdichtung kann auf dem Endabschnitt der ersten Leitung die Verbindungsmuffe in dieser Weise dicht anliegen.

Die miteinander zur Anlage gelangenden Wände der Verbindungsmuffe und die Verbindungshülse sind gemäß Anspruch 3 im wesentlichen zylindrisch. Diese gestatten eine von der Drehstellung der Verbindungsmuffe und der Verbindungshülse unabhängige, zuverlässige Verbindung.

Weitere vorteilhafte Merkmale der Fluidleitungsverbindungsanordnung sind in den Ansprüchen 4 - 16 angegeben.

In herstellungsgünstiger Weise ist nach Anspruch 4 die Verbindungshülse ein Kunststoffspritzteil.

Weiter die Herstellung rationalisierend kann die Verbindungshülse gemäß Anspruch 5 zusammen mit dem Ende der zweiten Leitung aus Kunststoff ausgeformt sein, wobei die zweite Leitung auch ein Ausgang oder Eingang eines anderen integralen Konstruktionselements sein kann. In diesem Fall ist die zweite Leitung vorzugsweise eine starre Kunststoffleitung.

Es ist aber gemäß Anspruch 7 auch möglich, daß die Verbindungshülse metallisch ausgeführt ist und auf einen Endabschnitt eines Metallrohrs als zweite Leitung aufgelötet ist.

Die Verbindungsmuffe, die auf dem Endabschnitt der ersten Leitung montiert ist, wird einfach als Ring, vorzugsweise aus Metall ausgebildet. Es ist aber auch möglich, den Ring als starres Kunststoffteil zu spritzen.

Eine alternative Ausführungsform der Verbindungsmuffe weist gemäß Anspruch 8 einen ersten Abschnitt auf, der einen Endabschnitt der ersten Leitung aufnimmt, sowie einen gegenüber dem ersten Abschnitt verjüngten zweiten Abschnitt, der von einem Ende der ersten Leitung vorsteht. Die vordere, ringförmige Stirnseite als Dichtfläche wird dabei durch eine Schulter zwischen dem ersten Abschnitt und dem zweiten Abschnitt gebildet. Der Innendurchmesser des ersten Abschnitts der Verbindungsmuffe entspricht dabei dem Außendurchmesser der ersten Leitung. Der Durchmesser des zweiten Abschnitts ist gegenüber demjenigen des ersten Abschnitts verjüngt. Der zweite Abschnitt steht über das Ende der ersten Leitung im montierten Zustand vor, so daß dieses Ende eine Führung der Verbindungsmuffe in der aufnehmenden Verbindungshülse bildet.

In den Endabschnitt der ersten Leitung kann weiterhin gemäß Anspruch 9 ein Stützrohr eingeschoben sein, auf dem sich der Endabschnitt bei einem Aufschieben der Verbindungsmuffe abstützen kann.

Unter Verwendung der Formmerkmale der voranstehenden Fluidleitungsverbindungsanordnung können mindestens zwei Verbindungshülsen gemäß Anspruch 10 in einem gemeinsamen Verbindungsteil ausgebildet sein, welches mindestens einen die Verbindungshülsen verbindenden Leitungsabschnitt umfaßt. Insbesondere kann das gemeinsame Verbindungsteil mit drei Verbindungshülsen entwickelt sein, die in dem Verbindungsteil über einen Leitungsabschnitt mit Abzweigung miteinander verbunden sind. Das letztgenannte Verbindungsteil kann somit auch als dreiseitiges Verbindungsteil bezeichnet werden. Wie oben bereits erwähnt, kann eine der Verbindungshülsen auch integraler Bestandteil eines anderen Konstruktionselements, beispielsweise eines Durchlauferhitzers, sein.

Weiterhin sind zwei Ausführungsformen des Arretierungselements entwikkelt, welches dazu dient, die in die Verbindungshülse eingeschobene Verbindungsmuffe in ihrer gewünschten Position zu halten:
In einer ersten Ausführungsform gemäß Anspruch 12 ist das Arretierungselement als Federklammer ausgebildet, die durch eine innen seitlich offene Schlitz-aufnahme in die Verbindungshülse reicht und an der hinteren ringförmigen Stirnseite der eingesteckten Verbindungsmuffe zur Anlage gelangt. Die Federklammer kann im Bedarfsfall aus der Schlitzaufnahme entfernt werden, um die Verbindung der Verbindungshülse mit der Verbindungsmuffe zu lösen. Desgleichen ist die Federklammer wieder verwendbar.
In einer Variante ist die Schlitzaufnahme der Verbindungshülse auch außen seitlich offen. Dies ermöglicht eine unkomplizierte Fertigung der Verbindungshülse und eine einfachere Handhabung der Federklammer zur Arretierung oder zum Lösen der Fluidleitungsverbindung.
Es ist gemäß Anspruch 14 aber auch möglich, daß die Verbindungshülse außen seitlich geschlossen ist, so daß die Federklammer weitgehend in der Schlitzaufnahme verschwindet und auch dann in dieser gehalten wird, wenn auf die Federklammer Kräfte durch den Innendruck in den Schläuchen ausgeübt werden, welche im ungünstigen Fall dazu tendieren, die Federklammer seitlich aus der Schlitzaufnahme zu schieben.
Alternativ kann das Arretierungselement gemäß Anspruch 15 als miteinander klappbar verbundene Halbschalen ausgebildet sein. Die Halbschalen weisen an ihren Stirnseiten Stege mit Ausnehmungen auf, so daß die Verbindungsmuffe und die Verbindungshülse, welche die Verbindungsmuffe aufnimmt, zwischen den aufeinander geklappten, miteinander verrasteten Halbschalen und den Stegen eingeschlossen sind. Durch Lösen der Rastelemente lassen sich die Halbschalen wiederum von den Leitungsenden mit der Verbindungsmuffe und der Verbindungshülse entfernen, um die Verbindung der beiden Leitungsenden zu lösen. Desgleichen sind die Halbschalen wieder verwendbar.
Bevorzugt bestehen die beiden Halbschalen sowie die an sie angeformten Elemente gemäß Anspruch aus Kunststoff.
Besonders vorteilhaft sind die Halbschalen über ein Filmscharnier unverlierbar einstückig miteinander verbunden. Dieses Arretierungselement kann rationell hergestellt werden und montiert werden, da die Relativlage der Halbschalen auf der Scharnierseite festliegt und diese nur auf der gegenüberliegenden Seite durch Rastelemente zu verbinden sind, um die Leitungsenden einzuschließen.
Alle erfindungsgemäßen Varianten der Fluidleitungsverbindungsanordnung eignen sich zur Schnellmontage.
Im folgenden werden Ausführungsbeispiele der erfindungsgemäßen Fluidverbindungsanordnung anhand der Zeichnung mit sieben Figuren beschrieben. Es zeigen:
   - Figur 1: Eine erste Ausführungsform der Fluidverbindungsanordnung als Explosionszeichnung,
   - Figur 2: die Fluidverbindungsanordnung gemäß Figur 1, jedoch vollständig zusammengebaut als Schnittzeichnung,
   - Figur 3: eine zweite Ausführungsform der Fluidverbindungsanordnung als Variante der ersten Ausführungsform als Explosionszeichnung,
   - Figur 4: eine dritte Ausführungsform der Fluidleitungsverbindungsanordnung als Explosionszeichnung,
   - Figur 5: die vollständig zusammengebaute Fluidverbindungsanordnung gemäß Figur 4 als Längsschnitt,
   - Figur 6: eine Einzelheit der dritten Ausführungsform, nämlich ein Arretierungselement mit Halbschalen in aufgeklapptem Zustand in einer Vorderansicht und
   - Figur 7: eine vierte Ausführungsform der Fluidleitungsverbindungsanordnung im zusammengebauten Zustand als Schnitt.

Übereinstimmende Teile der verschiedenen Ausführungsformen sind in allen Figuren mit gleichen Bezugszeichen versehen.

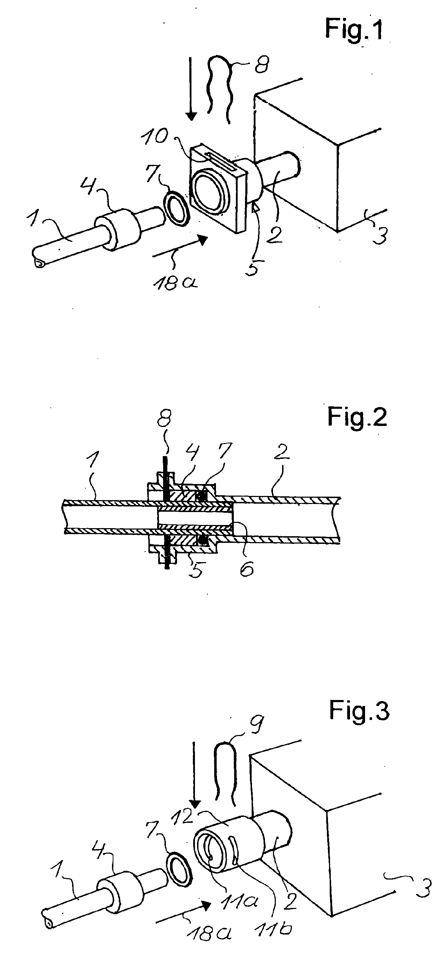

Im einzelnen ist in Figur 1 eine flexible Kunststoffleitung als erste Leitung 1 mit einer starren Kunststoffleitung als zweiter Leitung 2, die Teil eines nur teilweise angedeuteten Konstruktionselementes 3, z.B. eines Durchlauferhitzers ist, mit einer Fluidleitungsverbindungsanordnung zu verbinden.

Hierzu ist auf die flexible Kunststoffleitung bzw. erste Leitung 1 kurz vor ihrem verbindungsseitigen Ende eine als Metallring ausgeführte Verbindungsmuffe 4 aufgequetscht, die der Fixierung der ersten Leitung 1 in einer Verbindungshülse 5 dient. Damit die flexible Kunststoffleitung als ersten Leitung 1 durch den Quetschvorgang nicht deformiert wird, und ein fester Sitz der Verbindungsmuffe 2 gewährleistet ist, befindet sich an dem verbindungsseitigen Ende der flexiblen Kunststoffleitung im Bereich der Verbindungsmuffe 2 ein eingeführtes Stützrohr 6.

Die Verbindung der Leitungen 1 und 2 erfolgt mittels der Verbindungshülse 5, in die die Leitungen 1, 2 gesteckt werden. Zur Abdichtung ist auf der Seite der Verbindungshülse 5 ein O-Ring 7 vorgesehen, der an einer nicht bezeichneten verbindungsseitigen Stirnseite der Verbindungsmuffe 4 und an einer ebenfalls nicht bezeichneten Schulter anliegt, an der die zweite Leitung 2 endet und die Verbindungshülse in einen die Verbindungsmuffe 4 aufnehmenden Abschnitt größeren Innendurchmessers übergeht. Somit ist der Abschnitt der ersten Leitung 1, der an dem verbindungsseitigen Ende der Verbindungsmuffe 4 liegt, durch den O-Ring geschoben.

Die Verbindung der beiden Leitungen 1 und 2 ist in der ersten Ausführungsform gemäß den Figuren 1 und 2 sowie in der zweiten Ausführungsform gemäß Figur 3 durch jeweils eine Federklammer 8 bzw. 9, die durch jeweils ein Paar einander in der Verbindungshülse gegenüberliegende Schlitzaufnahmen geschoben ist und damit an der dem verbindungsseitigen Ende abgewandten Stirnseite der Verbindungsmuffe 4 zur Anlage gelangt, arretiert. In der ersten Ausführungsform gemäß den Figuren 1 und 2 sind die Schlitzaufnahmen in einem erweiterten Abschnitt der Verbindungshülse 5 seitlich geschlossen; es befindet sich lediglich auf der Oberseite eine in Figur 1 erkennbare Öffnung 10 rechtwinklig zwischen den beiden nicht gezeigten eigentlichen Schlitzaufnahmen. In der Ausführungsform gemäß Figur 3 sind hingegen die Schlitzaufnahmen 11 a und 11 b seitlich nach außen offen, womit sich die Formgebung der Verbindungsmuffe 12 vereinfacht. Dementsprechend liegt die Federklammer 8 in der Verbindungshülse 5 innen, und die Federklammer 9 liegt bezüglich der Verbindungshülse 12 teilweise außen.

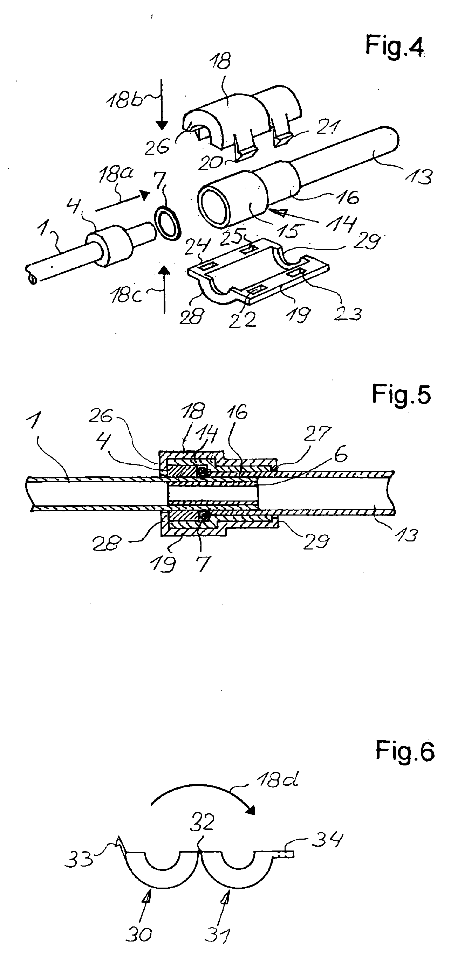

Die dritte Ausführungsform der Fluidleitungsverbindungsanordnung gemäß den Figuren 4 und 5 dient zum Verbinden einer ersten Leitung 1, die wiederum eine flexible Kunststoffleitung ist, mit einer zweiten Leitung 13, die hier als starre metallische Leitung bzw. Rohr ausgeführt ist. Dementsprechend sind eine Verbindungsmuffe 4 und ein Stützrohr 6 in gleicher Weise auf einem Endabschnitt der ersten Leitung 1 angeordnet wie zu Figur 1 und 2 beschrieben. Eine Verbindungshülse 14 besteht hier aus Metall. Sie weist wiederum einen ersten Abschnitt 15 relativ großen Durchmessers auf, der geeignet ist, einen Endabschnitt der ersten Leitung 1 aufzunehmen, sowie einen demgegenüber verjüngten zweiten Abschnitt 16, in den die zweite Leitung 13 bzw. das Rohr eingesteckt ist, um mit dem zweiten Abschnitt verlötet zu werden. Zwischen dem ersten Abschnitt und dem zweiten Abschnitt ist, wie aus Figur 5 ersichtlich, eine Schulter gebildet, an der ein O-Ring 7 zur Anlage gelangt, wenn der vordere Abschnitt der Leitung 11 mit dem O-Ring in die Verbindungshülse eingeschoben wird, bis der O-Ring 7 dicht an die vordere Stirnseite der Verbindungsmuffe 4 und die Schulter zwischen den Abschnitten 15, 16 drückt. Die Einschubrichtung der ersten Leitung 1 ist z.B. in Figur 4 mit einem Pfeil 18a angedeutet.

Anschließend kann die Arretierung der zusammengeschobenen Leitungen 1 und 13 erfolgen, indem zwei Halbschalen 18, 19 aus Kunststoff in Richtung der Pfeile 18b, 18c zu einer geschlossenen annähernd zylindrischen Form über der Verbindungsmuffe 4 und der Verbindungshülse 14 zusammengeklippt werden. Die Halbschale 18 weist dazu Federzungen 20, 21 als Rastelemente auf, die in Schlitze 22, 23 passen. Weitere, in Figur 4 nicht bezeichnete Federzungen können von den Schlitzen 24, 25 aufgenommen werden. Die Schlitze haben also eine Rastfunktion. Wie aus Figur 5 ersichtlich, liegen in der aufgeklippten Position der Halbschalen 18, 19 deren stirnseitige Stege 26 - 29 innen an hinteren, d.h. der Verbindungsstelle abgewandten Stirnseiten der Verbindungsmuffe 4 und der Verbindungshülse 14 an.

Es sei bemerkt, daß die zweite Leitung 13 wiederum Bestandteil eines nicht dargestellten Konstruktionselements sein kann.

In Figur 6 von vorne gezeigte Halbschalen 30, 31 sind als Spritzteil zusammen mit einem Filmscharnier 32 geformt und weisen zur gegenseitigen Verriegelung im zusammengeklappten Zustand, siehe Pfeil 18d, deswegen weniger Federzungen, z.B. 33, und Schlitze, z.B. 34, auf, die miteinander in Eingriff gelangen können, um eine Verbindungshülse mit einer Verbindungsmuffe sicher einzuschließen.

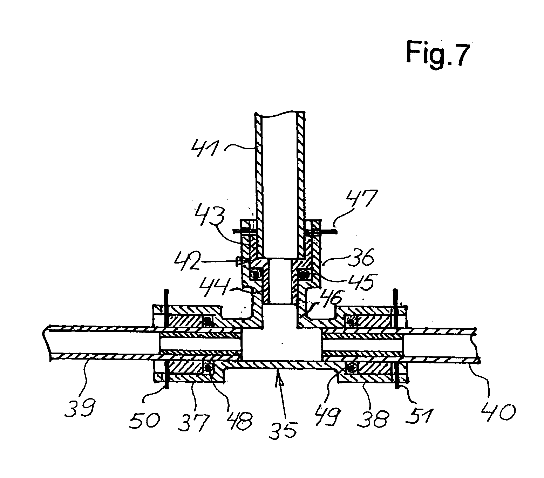

Eine besonders interessante Ausführungsform der Fluidleitungsverbindungsanordnung ist in Figur 7 dargestellt, in der die Fluidleitungsverbindungsanordnung ein Verbindungsteil 35 umfaßt, aus dem drei Verbindungshülsen 36, 37, 38 ausgeformt sind. Damit ist das gemeinsame Verbindungsteil zur Aufnahme von drei Leitungen geeignet, die in dem im wesentlichen T-förmigen Verbindungsteil miteinander kommunizieren können. In grundsätzlich ähnlicher Weise können Varianten des gemeinsamen Verbindungsteils nur zur Aufnahme von zwei Leitungen vorgesehen sein, die miteinander in langgestreckter Form oder abgewinkelt verbunden werden können.

In der dreiseitigen Ausführungsform des Verbindungsteils 35 sind gemäß Figur 7 zwei flexible Leitungen 39, 40 sowie eine starre Leitung 41 miteinander verbunden. Die starre Leitung kann wiederum eine metallische Rohrleitung, z.B. eines Durchlauferhitzers sein. Sie ist an ihrer Verbindungsstelle zu dem Verbindungsteil 35 mit einer aufgelöteten Verbindungsmuffe 42 versehen. Sie umfaßt einen ersten Abschnitt 43, der einen Endabschnitt der Leitung 41 aufnimmt, sowie einen demgegenüber verjüngten zweiten, endseitigen Abschnitt 44, der in einen zentralen Leitungsabschnitt des Verbindungsteils 35 eingesteckt werden kann. Zwischen dem ersten Abschnitt 43 und dem zweiten Abschnitt 44 der Verbindungsmuffe 42 ist eine Schulter gebildet, die zur Anlage eines abdichtenden O-Rings 45 dient. Der O-Ring 45 liegt andererseits auf einer Schulter der Verbindungshülse 36 bzw. eines Verbindungshülsenabschnitts des Verbindungsteils 35 auf, wo der Verbindungshülsenabschnitt in den Leitungsabschnitt 46 des Verbindungsteils 35 übergeht, der einen kleineren Durchmesser hat als der nach außen gerichtete Verbindungshülsenabschnitt. Zur Arretierung der in das Verbindungsteil 35 gesteckten starren Leitung 41 mit dem Verbindungsteil 35 und damit auch den anderen in das Verbindungsteil mündenden Leitungen dient eine Federklammer 47, die einerseits in einer nicht bezeichneten Schlitzaufnahme der Verbindungshülse 36 liegt und andererseits an eine hintere, in Figur 7 obere Stirnfläche der Verbindungsmuffe 42 anstößt.

Die Verbindungshülsen 37, 38 bzw. Verbindungshülsenabschnitte sind wie die Verbindungshülse 36 des Verbindungsteils 35 ausgeformt. Sie dienen zum Verbinden der beiden flexiblen Leitungen 39, 40 mit dem Verbindungsteil 35, wozu Endabschnitte der Leitungen 39, 40 mit nicht bezeichneten Verbindungsmuffen und Stützrohren versehen sind, wie in den Ausführungsformen gemäß den Figuren 1 bis 5. Zwischen den endseitigen bzw. verbindungsseitigen Stirnseiten der Verbindungsmuffen und den Schultern der Verbindungshülsen 37, 38 sind dicht anliegende O-Ringe 48, 49 eingeschlossen. Die Endabschnitte der Leitungen 39, 40 werden auch hier durch Federklammern 50, 51 in ihrer Einsteckposition gehalten.

Das System der Fluidleitungsverbindungsanordnung umfaßt also nur wenige Bauteile, die in vielfältiger Weise miteinander kombiniert werden können, und zwar: Verbindungsmuffen ggf. mit Stützrohren, Verbindungshülsen, O-Ringe zum Abdichten und Federklammern oder einrastbare Halbschalen zur Arretierung der Verbindung.

### Bezugszahlen

- 1: erste (flexible) Leitung
- 2: zweite Leitung (starr, Kunststoff)
- 3: Konstruktionselement
- 4: Verbindungsmuffe
- 5: Verbindungshülse
- 6: Stützrohr
- 7: O-Ring
- 8: Federklammer
- 9: Federklammer
- 10: Öffnung
- 1 1 a, b: Schlitzaufnahme
- 12: Verbindungshülse
- 13: zweite Leitung (starr, Metall)
- 14: Verbindungshülse (Metall)
- 15: 1. Abschnitt
- 16: 2. Abschnitt
- 18a, b, c: Pfeil
- 18: Halbschale
- 19: Halbschale
- 20: Federzunge
- 21: Federzunge
- 22: Schlitz
- 23: Schlitz
- 24: Schlitz
- 25: Schlitz
- 26: Steg
- 27: Steg
- 28: Steg
- 29: Steg
- 30: Halbschale
- 31: Halbschale
- 32: Filmscharnier
- 33: Federzunge
- 34: Schlitz
- 35: Verbindungsteil
- 36: Verbindungshülse
- 37: Verbindungshülse
- 38: Verbindungshülse
- 39: (flexible) Leitung
- 40: (flexible) Leitung
- 41: (starre) Leitung
- 42: Verbindungsmuffe
- 43: 1. Abschnitt
- 44: 2. Abschnitt
- 45: O-Ring
- 46: Leitungsabschnitt
- 47: Federklammer
- 48: O-Ring
- 49: O-Ring
- 50: Federklammer
- 51: Federklammer

## Patentansprüche

1. Fluidleitungsverbindungsanordnung mit mindestens einem Verbindungselement, welches geeignet ist, zwei Leitungsenden dicht miteinander zu verbinden,
wobei auf einem Endabschnitt einer ersten Leitung (1) eine Verbindungsmuffe (4) mit einer vorderen ringförmigen Stirnseite und einer hinteren ringförmigen Stirnseite form- und kraftschlüssig anliegend aufgebracht ist,
wobei von einem Ende einer zweiten Leitung (2, 13) eine Verbindungshülse (5, 14) vorsteht, aus der innen eine ringförmige Schulter ausgeformt ist und die geeignet ist, den Endabschnitt der ersten Leitung (1) mit der Verbindungsmuffe (4) aufzunehmen,
und wobei an der Verbindungshülse (5, 14) ein Arretierungselement lösbar anbringbar ist, welches an der hinteren Stirnseite der in die Verbindungshülse eingesteckten Verbindungsmuffe (4) anliegt,
**dadurch gekennzeichnet,**
**daß** die Verbindungsmuffe (4) innen eine durchgehend zylindrische Umfangswand aufweist und auf einen durchgehend zylindrischen Endabschnitt der ersten Leitung (1) aufgebracht ist und
**daß** die vordere ringförmige Stirnseite der Verbindungsmuffe (4) mittelbar oder unmittelbar an der ringförmigen Schulter der Verbindungshülse (5, 14) abdichtend anliegt.

2. Fluidleitungsverbindungsanordnung nach Anspruch 1,
**dadurch gekennzeichnet,**
**daß** ein O-Ring (7) zwischen der ringförmigen Schulter der Verbindungshülse (5, 14) und der vorderen ringförmigen Stirnseite der Verbindungsmuffe (4) eingeschlossen ist, dergestalt, daß der O-Ring (7) einerseits an der vorderen ringförmigen Stirnseite der Verbindungsmuffe (4) und andererseits an der ringförmigen Schulter der Verbindungshülse (5, 14) anliegt.

3. Fluidleitungsverbindungsanordnung nach wenigstens einem der Ansprüche 1 und 2,
**dadurch gekennzeichnet,**
**daß** die Verbindungsmuffe (4) außen und die Verbindungshülse (5, 14) innen im wesentlichen zylindrisch sind.

4. Fluidleitungsverbindungsanordnung nach wenigstens einem der Ansprüche 1 - 3,
**dadurch gekennzeichnet,**
**daß** die Verbindungshülse (5) ein Kunststoffspritzteil ist.

5. Fluidleitungsverbindungsanordnung nach Anspruch 4,
**dadurch gekennzeichnet,**
**daß** die Verbindungshülse (5) zusammen mit dem Ende der zweiten Leitung (2) aus Kunststoff ausgeformt ist.

6. Fluidleitungsverbindungsanordnung nach wenigstens einem der Ansprüche 1 - 3,
**gekennzeichnet durch**
eine metallische Verbindungshülse (14), die auf einen Endabschnitt eines Metallrohrs als zweite Leitung (13) aufgelötet ist.

7. Fluidleitungsverbindungsanordnung nach wenigstens einem der Ansprüche 1 bis 6,
**dadurch gekennzeichnet,**
**daß** die Verbindungsmuffe (4) als Ring ausgebildet ist, der in einem Abstand von einem Ende der ersten Leitung (1) auf deren Endabschnitt dicht aufgebracht ist.

8. Fluidleitungsverbindungsanordnung nach wenigstens einem der Ansprüche 1 - 6,
**dadurch gekennzeichnet,**
**daß** eine zusätzliche Verbindungsmuffe (42) einen ersten Abschnitt (43) aufweist, der einen Endabschnitt der ersten Leitung (41) aufnimmt, sowie einen gegenüber dem ersten Abschnitt verjüngten zweiten Abschnitt (44), der von einem Ende der ersten Leitung (41) vorsteht, wobei die vordere ringförmige Stirnseite der Verbindungsmuffe durch eine Schulter zwischen dem ersten Abschnitt (43) und dem zweiten Abschnitt (44) gebildet ist.

9. Fluidleitungsverbindungsanordnung nach wenigstens einem der vorangehenden Ansprüche,
**dadurch gekennzeichnet,**
**daß** in dem Endabschnitt der ersten Leitung (1) ein Stützrohr (6) eingeschoben ist, derart, daß der Endabschnitt zwischen dem Stützrohr (6) und zumindest einem Abschnitt der Verbindungsmuffe (4) eingeschlossen ist.

10. Fluidleitungsverbindungsanordnung nach mindestens einem der Ansprüche 1 - 4, 6 - 9,
**dadurch gekennzeichnet,**
**daß** mindestens zwei Verbindungshülsen (36, 37, 38) in einem gemeinsamen Verbindungsteil (35) ausgebildet sind, welches mindestens einen die Verbindungshülsen verbindenden Leitungsabschnitt (46) umfaßt.

11. Fluidleitungsverbindungsanordnung nach wenigstens einem der Ansprüche 1 - 4, 6 - 9,
**dadurch gekennzeichnet,**
**daß** die Verbindungshülse (5) integraler Bestandteil eines Konstruktionselements (3) ist.

12. Fluidleitungsverbindungsanordnung nach wenigstens einem der Ansprüche 1 - 11,
**dadurch gekennzeichnet,**
**daß** das Arretierungselement als Federklammer (8, 9, 47, 50, 51) ausgebildet ist, die durch eine innen seitlich offene Schlitzaufnahme (10, 11a, 11b) in die Verbindungshülse (5, 12) reicht und an der hinteren ringförmigen Stirnseite der eingesteckten Verbindungsmuffe (4, 42) zur Anlage gelangt.

13. Fluidleitungsverbindungsanordnung nach Anspruch 12,
**dadurch gekennzeichnet,**
**daß** die Schlitzaufnahme (11 a, 11 b) der Verbindungshülse (12) auch außen seitlich offen ist.

14. Fluidleitungsverbindungsanordnung nach Anspruch 12,
**dadurch gekennzeichnet,**
**daß** die Schlitzaufnahme (10) der Verbindungshülse (5) außen seitlich geschlossen ist.

15. Fluidleitungsverbindungsanordnung nach wenigstens einem der Ansprüche 1 - 11,
**dadurch gekennzeichnet,**
**daß** das Arretierungselement als miteinander verbindbare Halbschalen (18, 19, 30, 31 ) mit Rastelementen ausgebildet ist,
und **daß** die Halbschalen an ihren Stirnseiten Stege (26, 27, 28, 29) mit Ausnehmungen aufweisen, derart, daß die Verbindungsmuffe (4) und die Verbindungshülse (14), welche die Verbindungsmuffe aufnimmt, zwischen den aufeinander geklappten, miteinander verbundenen Halbschalen (18, 19) und den Stegen (26 - 29) eingeschlossen sind.

16. Fluidleitungsverbindungsanordnung nach Anspruch 15,
**dadurch gekennzeichnet,**
**daß** die beiden Halbschalen (30, 31) aus Kunststoff bestehen und über ein Filmscharnier (32) einstückig verbunden sind.
